# DEMANDE DE BREVET EUROPEEN

(11) **EP 2 891 624 A1**
(43) Date de publication de la demande: **08.07.2015**
(21) Numéro de dépôt: 15153599.4
(22) Date de dépôt: 16.12.2009
(51) Int. Cl.: C01B 3/00

(54) **Reservoir adiabatique d'hydrure metallique**

(30) Priorité: 16.12.2008 FR 0807087
(62) Demande divisionnaire de: 09801232.1
(71) Demandeur: Centre National de la Recherche Scientifique, 75016 Paris (FR); McPhy Energy, 26190 La Motte - Fanjas (FR)
(72) Inventeur: Fruchart, Daniel, 38130 Echirolles (FR); Jehan, Michel, 74890 Fessy (FR); De Rango, Patricia, 38610 Gieres (FR); Miraglia, Salvatore, 38000 Grenoble (FR); Marty, Philippe, 38410 Saint Martin D'Uriage (FR); Chaise, Albin, 38000 Grenoble (FR); Garrier, Sylvain, 38000 Grenoble (FR); Bienvenu, Gérard, 74250 Viuz-en-Salaz (FR)
(74) Mandataire: Fidal Innovation

(57) **Abrégé**

L'invention a pour objet un réservoir de stockage d'hydrogène comprenant une entrée (21) et une sortie (22) d'hydrogène en communication fluidique avec une pluralité de corps solides (10-11) en forme de pastilles d'un matériau compacté comprenant de l'hydrure métallique léger et une matrice thermiquement conductrice, empilés à l'intérieur d'un conteneur suivant au moins une direction d'empilement, capables d'absorption exothermique et de désorption endothermique de l'hydrogène, et en relation de transfert de chaleur avec au moins un matériau de récupération de chaleur (42), dépourvu de composé de type sels ou sels fondus, et apte à absorber la chaleur produite par l'absorption de l'hydrogène, et à restituer cette chaleur absorbée pour fournir de la chaleur pour la désorption de l'hydrogène.

Il possède aussi un échangeur de chaleur agencé de manière à transférer la chaleur des pastilles au matériau de stockage de chaleur et inversement, et comprenant des plaques métalliques empilées en alternance avec les pastilles.

## Description

L'invention se rapporte à un réservoir adiabatique d'hydrure métallique.

L'hydrogène est utilisé dans de nombreux domaines industriels, notamment à titre de combustible ou de réactif (pour des réactions d'hydrogénation par exemple). Dans ce cadre, compte-tenu de son volume à l'état gazeux et de son explosivité à l'air, il est souhaitable que l'hydrogène soit stocké sous une forme assurant un encombrement réduit et un confinement sûr.

Le mode de stockage le plus répandu actuellement consiste à comprimer l'hydrogène gazeux. Ce stockage dit « hyperbare » se fait à une pression comprise entre 350 et 700 bars. Ainsi, les réservoirs utilisés doivent résister à de fortes pressions et sont donc coûteux. En outre, on observe un mauvais vieillissement des matériaux et de la structure de ces réservoirs, ce qui pose des problèmes de sécurité au-delà d'un certain nombre de cycles de remplissage.

Un autre mode de stockage consiste à liquéfier l'hydrogène dans des réservoirs cryogéniques à basse température (-253°C). L'un des inconvénients majeurs de cette solution réside dans l'isolation des réservoirs, surtout dans les applications grand public. En effet, malgré une isolation performante, on constate que l'hydrogène contenu dans ces réservoirs se réchauffe. Il se transforme alors en gaz et s'échappe du réservoir. Ce phénomène est appelé «boil-off». Il génère des pertes, ce qui interdit son application dans des locaux fermés.

Les deux types de stockage précédents nécessitent, en outre, une quantité importante d'énergie pour comprimer ou refroidir l'hydrogène. Le bilan énergétique de l'utilisation d'hydrogène avec ces modes de stockages est donc mauvais.

Depuis quelques années, un stockage de l'hydrogène sous forme d'hydrure métallique a été étudié comme une alternative avantageuse permettant des conditions de stockage plus sûres et une dépense énergétique limitée.

Certains métaux ou alliages peuvent incorporer de manière réversible des atomes d'hydrogène dans le réseau cristallin. L'hydrogène est absorbé/désorbé par ces matériaux en fonction des conditions de température et de pression. Il s'agit par exemple du Palladium (Pd), du Magnésium (Mg), de ZrMn2. Mg2Ni ou d'alliages comme Mg-Mg2Ni ou d'alanates. Le terme « hydrure métallique » tel qu'utilisé ici couvre également, selon l'étape du procédé, le métal partiellement ou complètement chargé d'hydrogène.

On distingue généralement deux types d'hydrures métalliques: les hydrures lourds (principalement LaNi5, et des alliages tels que l'alliage ferro-titane ou l'alliage à base de Ti V-Cr) (principalement le magnésium et le lithium).

Avec les hydrures lourdes, l'hydrogène est absorbé à température et pression ambiantes. L'exothermie de la réaction est généralement modérée (inférieure ou égale à 35 kJ/mol H2). Ensuite, lors de l'utilisation, l'hydrogène est désorbé à température et pression ambiante. L'apport d'énergie nécessaire pour utiliser l'hydrogène est raisonnable. Ces hydrures lourdes sont, par conséquent, préconisés généralement pour l'alimentation en hydrogène de piles à combustibles.

Au contraire, avec les hydrures légers, l'absorption de l'hydrogène par l'hydrure métallique léger nécessite une température plus élevée (environ 300°C pour MgH2). Cette réaction est très exothermique (75 kJ/mol H2). L'apport d'énergie nécessaire pour initier la réaction d'absorption de l'hydrogène est donc modéré. Par contre, la réaction d'absorption s'interrompt spontanément si la chaleur produite n'est pas évacuée. De plus, lors de l'utilisation, la désorption de l'hydrogène nécessite un apport de chaleur important, la réaction étant endothermique. L'utilisation d'hydrures légers nécessite donc une gestion thermique très précise, tant lors de l'absorption que de la désorption de l'hydrogène.

L'absorption d'une mole de H2 dégage 75 kJ/mol, alors que sa combustion ultérieure dégage seulement 250 kJ/mol, d'où un rendement thermique de l'ordre de 70% si la chaleur de réaction n'est pas récupérée. Ensuite, on doit prendre en compte les rendements des machines thermiques (environ 27%) ou des piles à combustibles (environ 60%), ce qui démontre que l'utilisation de ce mode de stockage n'a aucun intérêt énergétique, si l'énergie thermique (75 kJ/mol) n'est pas récupérée.

La présente invention propose de récupérer l'énergie thermique de l'absorption et de l'utiliser pour la désorption afin d'atteindre un rendement global satisfaisant.

Or, ceci apparaît dangereux et inefficace. Ainsi, il a déjà été proposé, dans le brevet EP 0 015 106, de réaliser un réservoir d'hydrure métallique en poudre, comprenant un milieu à base de sels fondus pour le stockage de la chaleur de la réaction exothermique d'absorption permettant de restituer cette chaleur lors de la désorption endothermique.

Cependant, du fait de leur très faible conductivité thermique (environ 0,5 W/m.K), la cinétique de fusion des sels par rapport aux matériaux faisant l'objet de la présente invention est 3 à 10 fois moins rapide. Le brevet EP 0 015 106 exclut toute possibilité d'exploitation à de forts niveaux de puissance thermique. En outre, les sels fondus, en plus de leur faible conductivité thermique, sont corrosifs voire, pour certains, toxiques ou explosifs. En cas de fuite accidentelle, la réaction entre le sel fondu et l'hydrure métallique est extrêmement violente. Ils présentent de plus une forte différence de masse spécifique entre leur phase solide et leur phase liquide qui provoque des retassures importantes.

La présente invention vise donc à proposer un réservoir de stockage d'hydrogène sûr, facile à fabriquer, offrant une cinétique rapide d'absorption de l'hydrogène, minimisant les variations de volume et peu coûteux en matériau et en énergie.

Pour remédier aux inconvénients des solutions connues, la présente invention propose un réservoir de stockage d'hydrogène utilisant un hydrure métallique léger, en particulier de l'hydrure de magnésium, compacté avec une matrice thermiquement conductrice et combiné à un système de stockage réversible de la chaleur d'absorption de l'hydrogène sur l'hydrure de magnésium, de préférence un système métallique tel que par exemple un alliage de magnésium, et à un moyen de poussée de l'hydrure compacté en contact thermique avec le système de stockage réversible de la chaleur.

A cette fin, l'invention a pour objet un réservoir de stockage d'hydrogène selon la revendication 1.

D'autres modes de réalisation sont décrits dans les revendications 2 à 15 :

L'utilisation d'un hydrure métallique léger compacté avec une matrice thermiquement conductrice permet d'utiliser un système de stockage réversible de la chaleur d'absorption de l'hydrogène, et d'obtenir une cinétique d'absorption rapide (de l'ordre de quelques minutes). Le système de stockage selon l'invention est, en outre, léger, peu coûteux en énergie, sûr et il minimise les variations de volume.

D'autres caractéristiques de l'invention seront énoncées dans la description détaillée ci-après faite en référence aux figures annexées qui représentent, respectivement:
les figures 1a à 1c, trois diagrammes comparatifs de la cinétique d'absorption de l'hydrogène par, respectivement, de la poudre d'hydrure de magnésium, par un matériau compacté d'hydrure de magnésium comprenant 5 % en poids de graphite naturel expansé combiné à un échangeur de chaleur. et par un matériau compacté d'hydrure de magnésium comprenant 20 % en poids de graphite naturel expansé :
la figure 2, une vue schématique en perspective d'une pastille d'un corps solide de stockage d'hydrogène selon l'invention ;
la figure 3, un diagramme de la cinétique de désorption de l'hydrogène avec une pastille d'hydrure de magnésium compacté comprenant 20 %en poids de graphite naturel expansé, en fonction de la longueur caractéristique de la pastille et de la pression de désorption ;
la figure 4, un diagramme de la cinétique d'absorption à une pression de 10 bars en fonction de la conductivité thermique du matériau à changement de phase, pour une pastille de MgH2/GNE(20%), et une longueur caractéristique de 5 cm ; la figure 5, un diagramme de la courbe Pression=f(Température) d'équilibre de la réaction de l'hydrure de magnésium avec l'hydrogène ;
la figure 6, une vue schématique en coupe latérale d'un premier mode de réalisation d'un réservoir de stockage d'hydrogène selon l'invention ;
la figure 7, une vue schématique en coupe de dessus du réservoir de la figure 6 ;
la figure 8, une vue schématique en coupe de dessus d'un deuxième mode de réalisation d'un réservoir de stockage d'hydrogène selon l'invention ;

Dans la suite de la description, le terme « corps solide » est utilisé par opposition à un corps fluide tel qu'une poudre.

Le terme « matériau compacté » tel qu'utilisé par la suite signifie un matériau dont la masse volumique est significativement supérieure
à celle des matières premières à l'état pulvérulent. Ce matériau est en particulier obtenu par compression d'un mélange de matières premières sous forme de poudre. La porosité est de 0,7 pour le MgH2 pulvérulent et pourra atteindre 0,3 après compaction à 108 Pa.

L'invention se rapporte principalement, mais non exclusivement, à l'hydrure de magnésium MgH2 car il présente de nombreux avantages : le magnésium est recyclable, biocompatible, abondant et peu couteux. L'hydrure de magnésium présente, en outre, une capacité de stockage de l'hydrogène élevée (7,6% massique) et une densité volumétrique proche de celle de l'hydrogène liquide.

Selon l'invention. de l'hydrure de magnésium MgH2 est activé
par co-broyage de l'hydrure de magnésium avec un métal de transition. Un alliage de métaux de transition ou un oxyde de métal de transition préférablement introduits dans des proportions comprises entre 1 et 10% atomique par rapport au mélange.

Le terme « métal de transition » tel qu'utilisé ici vise les éléments chimiques possédant à l'état atomique une sous-couche d partiellement remplie ou qui forment au moins un ion avec une sous-couche d partiellement remplie. Particulièrement visés sont les métaux de transition V, Nb, Ti, Cr et Mn et leurs carbures ou sous carbures.

L'hydrure de magnésium activé se présente avantageusement sous forme de poudre très fine, de granulométrie comprise entre 1 et 101Jm.

Cette activation peut être réalisée notamment par co-broyage avec un alliage de structure cubique centrée à base de titane, de vanadium et soit de chrome soit de manganèse. Les poudres obtenues présentent de très bonnes performances en terme de cinétique d'absorption et de désorption d'hydrogène, mais sont cependant très réactives et peuvent s'enflammer spontanément à l'air.

L'hydrure de magnésium ainsi activé est mélangé à une matrice thermiquement conductrice choisie par exemple mais non exclusivement parmi le graphite expansé, le graphite naturel expansé (GNE), des fibres de graphite, des feutres métalliques, des céramiques non oxydes et des mousses de cuivre revêtues.

On entendra par «matrice thermiquement conductrice», un matériau mélangé à la poudre et favorisant la cohésion du produit obtenu par compactage et la conduction thermique.

Le GNE est une forme de graphite modifié par traitements chimiques et thermiques. Le graphite est avantageux car il est hydrophobe, réfractaire et bon conducteur de chaleur.

Le GNE est particulièrement efficace car il se présente sous forme de petits feuillets de taille millimétrique, ce qui lui confère un caractère fortement anisotrope, et ce qui favorise la conduction de la chaleur sur de grandes distances, à une échelle très supérieure à celle des grains de magnésium.

Les particules de GNE se présentent avantageusement sous forme de vermicules de forme allongée, possédant un diamètre de l'ordre de 500 !Jm et une longueur de quelques millimètres.

Sous l'effet d'une compaction uniaxiale,' les vermicules s'orientent sensiblement perpendiculairement à l'axe de compression. Ceci confère au matériau composite un comportement thermique fortement anisotrope, et favorise la conduction de la chaleur perpendiculairement à l'axe de compression (de l'ordre de 5 à 15 W/m.K, selon la proportion de GNE).

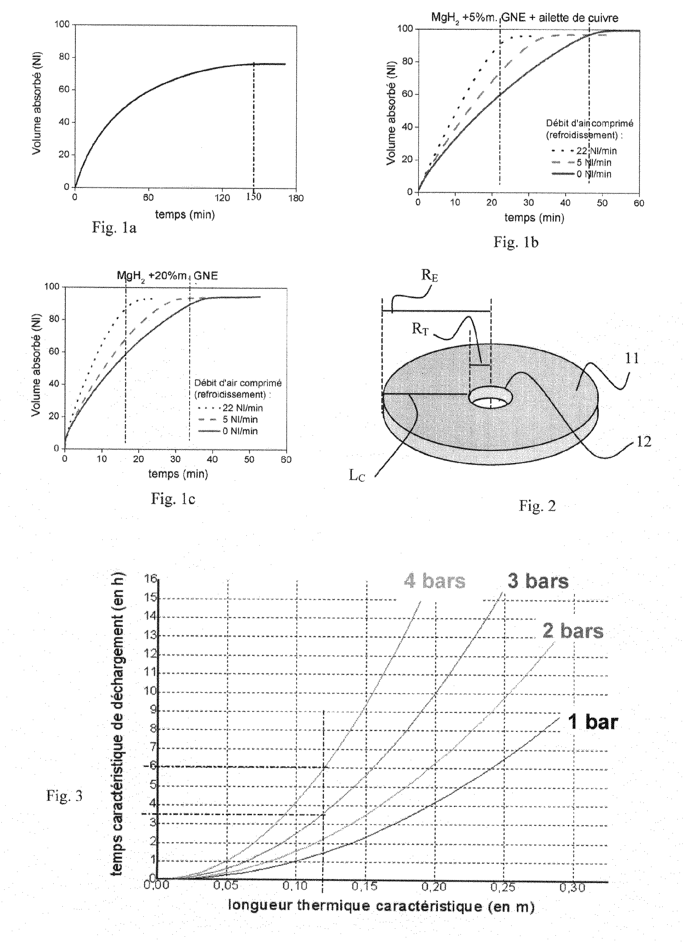

La force exercée lors de la compaction est choisie notamment en fonction de la porosité souhaitée dans le matériau. A titre indicatif, une force de compression de l'ordre de 1 t/cm2 s'est révélée appropriée pour l'obtention de pastilles de matériau (figure 2) présentant une porosité de l'ordre de 0,3.

La proportion de graphite naturel expansé dans la composition résulte d'un compromis entre l'augmentation de la conductivité thermique et la baisse de capacité massique d'absorption, le GNE n'absorbant pas d'hydrogène.

Selon l'invention, le matériau compacté comprend entre 75 et 99 % en poids d'hydrure de magnésium et entre 25 et 1% en poids de 20 graphite naturel expansé.

Le GNE permet une meilleure gestion des flux thermiques lors de l'opération d'hydruration exothermique, et donc une réduction importante du temps de rechargement en hydrogène.

Dans la suite de la description le matériau compacté du corps solide sera noté MgH2/GNE (X%), où X est le pourcentage de matrice, telle que le GNE, utilisé. Le matériau obtenu présente une porosité réduite par rapport à de la poudre, ce qui augmente sa capacité volumique de stockage d'hydrogène. Sa forme compacte lui confère une tenue mécanique qui facilite son utilisation et qui permet un usinage afin de lui donner une forme souhaitée.

En outre, l'hydruration d'un corps solide obtenu par la compaction de MgH2/GNE (X%), ne s'accompagne que d'une faible augmentation de volume.

Par ailleurs, contre toute attente, après compaction, le composite est manipulable à l'air, sans risque d'inflammation spontanée même lorsqu'il a été préparé avec de l'hydrure de magnésium activé. Cela permet un chargement plus sûr et plus facile des réservoirs.

Les figures 1a à 1c illustrent trois diagrammes comparatifs de la cinétique d'absorption de l'hydrogène par de la poudre d'hydrure de magnésium non compactée (figure 1a), par un matériau compacté d'hydrure de magnésium comprenant 5 % en poids de GNE (figure 1b) et par un matériau compacté d'hydrure de magnésium comprenant 20 % en poids de GNE (figure 1c). Le graphique 1a est donné pour un régime d'évacuation naturelle de la chaleur de l'absorption de l'hydrogène par l'hydrure métallique, soit: 0 NI par minute (normolitre: le normolitre NI représente un litre du gaz dans des conditions normales de température et de pression). Les graphiques 1b et 1c sont donnés pour trois régimes d'évacuation de la chaleur de l'absorption de l'hydrogène par l'hydrure métallique : 0 NI par minute, 5 NI par minute et 22 NI par minute.

La figure 1a montre que la poudre d'hydrure de magnésium seule s'hydrure lentement. Typiquement, sa capacité maximale d'absorption est atteinte en 150 minutes environ.

Le matériau compacté utilisé pour la figure 1b a été mis en relation dé transfert de chaieur avec un échangeur de chaleur.

La figure 1b montre que la capacité maximale d'absorption du matériau compacté d'hydrure de magnésium comprenant 5 % en poids de graphite naturel expansé est atteinte en 50 minutes environ sans refroidissement. Lorsque le refroidissement est maximal (22 NI/minute), la capacité maximale est atteinte en seulèment 25 minutes environ.

La^Wcomparaison des figures 1a et 1b montre que le corps solide selon l'invention présente une conductivité thermique radiale très supérieure à celle obtenue avec une poudre de magnésium.

Pour un pourcentage de GNE compris entre 5 et 10%, il est préférable d'utiliser un échangeur de chaleur pour favoriser les échanges thermiques.

En effet, le matériau MgH2/GNE (5%) seul permet un temps de chargement d'environ une heure (contre plusieurs heures avec de la poudre d'hydrure de magnésium). Lorsque le matériau MgH2/GNE (5%) est combiné à un échangeur de chaleur, le temps de chargement est ramené à environ une demi-heure.

L'échangeur de chaleur utilisé comprend des ailettes métalliques (en cuivre) empilées en alternance avec des pastilles ou des demi-pastilles de MgH2/GNE (5%) selon au moins une direction d'empilement.

Cependant, cet échangeur de chaleur nécessite l'utilisation, dans le réservoir, d'une masse de cuivre équivalente à la masse de magnésium des pastilles. Autrement dit, la moitié de la masse est représentée par du cuivre qui ne stocke pas d'hydrogène.

Outre son prix élevé, le cuivre, s'il n'est pas protégé, par exemple, avec un revêtement céramique, peut réagir à terme avec le magnésium en formant un alliage binaire MgCu ; cela réduit la quantité de magnésium disponible pour stocker l'hydrogène.

La figure 1c montre que la capacité maximale d'absorption du matériau compacté d'hydrure de magnésium comprenant 20 % en poids de graphite naturel expansé est atteinte en 40 minutes environ sans refroidissement. Lorsque le refroidissement est maximal (22 NI/minute), ce volume est rempli en seulement 20 minutes environ.

Ainsi, en augmentant le pourcentage de GNE la conductivité thermique est améliorée. La conductivité thermique de MgH2/GNE (5%) est d'environ 4 W/m.K. alors que la conductivité thermique de MgH2/GNE (20%) est d'environ 15W/m.K.

Cette augmentation est telle qu'un échangeur de chaleur n'est plus nécessaire pour un pourcentage de GNE sensiblement égal à 20%. Cet avantage compense la diminution de capacité massique d'absorption due à ce taux de GNE. En effet, à masse égale, il est possible d'utiliser deux fois plus 5 de matériau MgH2/GNE (20%) que de matériau MgH2/GNE (5%).

La taille des pastilles a également une influence importante sur le temps de chargement 1 déchargement de l'hydrogène qui est fonction de la longueur caractéristique de diffusion de la chaleur dans le matériau. Ainsi, on définit pour une pastille selon l'invention illustré en figure 2, une longueur caractéristique Le définie comme étant la distance égale au rayon extérieure RE de la pastille moins le rayon Rr du trou central. Une pastille ayant un rayon extérieure RE de 9 cm et un trou central d'un rayon Rr de 1 cm aura une longueur caractéristique Le = 8 cm.

La figure 3 présente les temps de déchargement calculés en fonction de cette longueur caractéristique et de la pression en sortie de réservoir. Ces temps de désorption de l'hydrogène sont ceux obtenus lorsque la conductivité thermique du matériau de stockage de l'hydrogène est le facteur limitant la réaction. Pour conserver un temps de chargement/déchargement (ou absorption/désorption) de l'ordre de quelques heures, il est donc préférable de conserver une longueur caractéristique de pastille limitée. Ainsi, pour optimiser l'efficacité du réservoir en termes de vitesse de chargement/déchargement, il est souhaitable de privilégier plusieurs empilements de pastilles de longueur caractéristique réduite, disposés « en faisceaux », plutôt qu'un seul empilement de pastilles de 25 grande longueur caractéristique.

A titre d'exemple, d'après la figure 3, une pastille en MgH2/GNE (20%) ayant une longueur caractéristique de 12 cm permettrait de décharger le réservoir en 6 h pour une pression de sortie de 4 bars, ou 3h30 pour une pression de 3 bars, ce qui est compatible avec un cycle de fonctionnement jour 1 nuit.

L'invention propose l'utilisation d'un tel matériau compacté, comprenant de l'hydrure métallique et une matrice thermiquement conductrice, en relation de transfert de chaleur avec un matériau de récupération de chaleur, dépourvu de composé de type sels ou sels fondus et apte à absorber la chaleur produite par l'absorption de l'hydrogène, et à restituer cette chaleur absorbée pour fournir de la chaleur pour la désorption de l'hydrogène.

Préférentiellement, l'invention propose l'utilisation d'un tel matériau compacté, comprenant de l'hydrure métallique et une matrice thermiquement conductrice, en relation de transfert de chaleur avec un matériau à changement de phase.

Selon l'invention, le matériau à changement de phase utilisé est, de préférence, un alliage métallique.

Ainsi, lors de l'alimentation en hydrogène, la chaleur produite par l'absorption de l'hydrogène est emmagasinée dans le matériau à changement de phase 42 quand celui-ci passe d'une première à une deuxième phase. Ultérieurement, lors de l'utilisation, la chaleur emmagasinée est restituée lorsque le matériau à changement de phase passe de la deuxième à la première phase. Cela fournit l'énergie nécessaire à la désorption endothermique.

De préférence le matériau est choisi pour passer de la phase solide à la phase liquide et inversement. Cela permet d'assurer une conduction thermique important et un volume de la cuve raisonnable.

L'évaporation, la sublimation et le recours à une réaction endothermique sans changement de phase peuvent également être utilisés.

Une expérience comparative a été menée pour illustrer la différence de vitesse de chargement de l'hydrogène en utilisant soit un matériau à changement de phase à base de sels, soit un matériau à changement de phase comprenant un alliage métallique conforme à l'invention.

Un réacteur comporte un réservoir interne de diamètre 10 cm rempli de matériau composite MgH2 + 20'% de GNE dans l'état déshydruré. Le réservoir interne est introduit dans un cylindre isolé et rempli successivement d'alliage métallique de composition atomique Mg83%-Zn27% et de sels de composition molaire : NaCI 60% -FeCiz 40%. Le matériau de stockage de la chaleur est préchauffé à 330°C. Lorsqu'on introduit une pression d'hydrogène de 7 bars, la température de l'hydrure atteint brutalement la valeur de 360°C et le front de fusion se propage dans le matériau à changement de phase. Les temps de chargement sont respectivement de plus de 2h avec les sels, et de seulement 15 minutes avec l'alliage métallique.

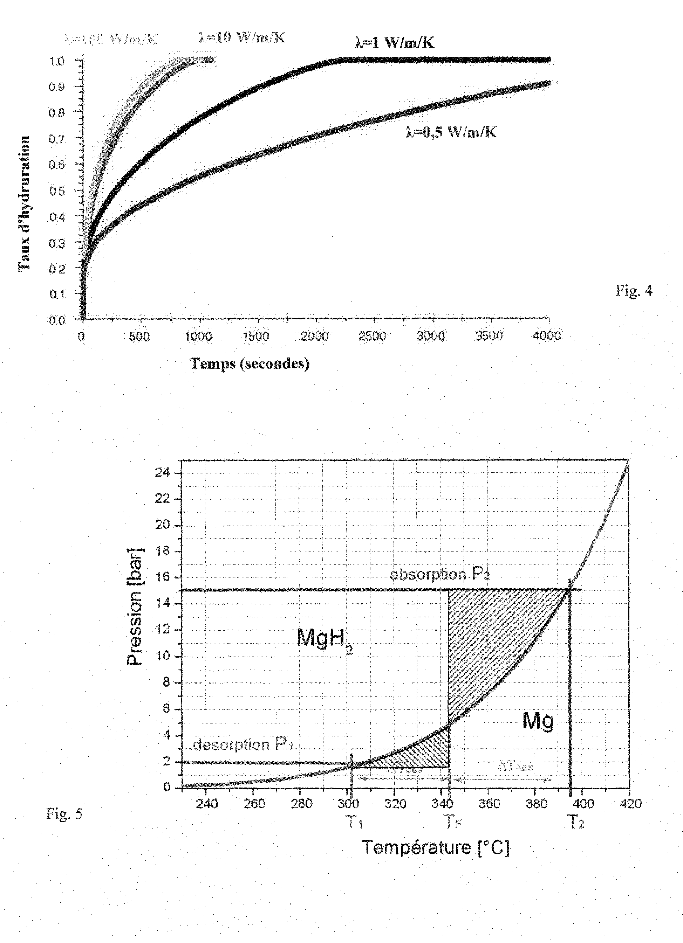

Sur la figure 4, les vitesses d'absorption à une pression de 10 bars ont été calculées en fonction de la conductivité thermique 'A. du matériau à changement de phase, pour une pastille d'hydrure de magnésium compacté comprenant 20% en masse de GNE, et une longueur caractéristique de 5 cm.

La valeur de 0,5 W/m.K correspond typiquement à un sel. Celle d'un métal fondu est supérieure à 100 W/m.K. Les courbes montrent qu'au-delà d'une valeur de 10 W/m.K, c'est la conductivité thermique de l'hydrure qui devient le facteur limitant.

Le matériau à changement de phase utilisé présente une conductivité thermique supérieure ou égale à 5 W/m.K, avantageusement supérieure ou égale à 10 W/m.K, typiquement égale à environ 100 W/m.K. Il est également choisi pour avoir une chaleur latente de fusion maximale, de préférence supérieure à 200 kJ/kg.

La chaleur produite durant l'absorption de l'hydrogène est emmagasinée dans le matériau à changement de phase et est utilisée pour fournir ultérieurement de la chaleur au matériau compacté pour la désorption de l'hydrogène.

L'utilisation du matériau compact MgH2/GNE (X%) en combinaison avec un matériau à changement de phase, permet un stockage d'hydrogène efficace et rapide, même si l'absorption de l'hydrogène sur l'hydrure de magnésium est très fortement exothermique.

La figure 5 illustre le diagramme de la courbe d'équilibre thermodynamique Pression d'hydrogène = f(Température) de la réaction de l'hydrure de magnésium avec l'hydrogène.

En général, les pressions d'alimentation P2 visées sont typiquement de l'ordre de 10 à 20 bars (absorption) et les pressions d'utilisation P1 visées sont typiquement de l'ordre de 1 à 4 bars (désorption). Ces pressions d'alimentations sont celles obtenues par l'utilisation d'un électrolyseur classique, alimenté par exemple par des cellules photovoltaïques. Ces pressions d'utilisation sont classiques pour l'alimentation en hydrogène dans des moteurs thermiques, les turbines et des piles à combustible.

Dans le cas de l'hydrure de magnésium, cela conduit à une température T, de désorption comprise entre 280°C et 320°C, et à une température T2 d'absorption comprise entre 340°C et 400°C.

Dans la pratique, lorsqu'on applique une pression donnée d'hydrogène P2 pour stocker l'hydrogène, la réaction d'absorption exothermique conduit à une élévation brutale de température dans tout le matériau MgH2/GNE (X%) pour a1teindre la température d'équilibre absorption/désorption correspondante T2. Au voisinage de la courbe d'équilibre, les cinétiques de réaction sont très lentes et si la chaleur de réaction n'est pas évacuée efficacement, le temps de chargement d'un réservoir peut prendre plusieurs dizaines d'heures. A l'inverse, lorsqu'on abaisse la pression à la valeur P1 pour utiliser l'hydrogène, on observe une chute brutale de température, jusqu'à la température d'équilibre absorption/désorption T1. Le débit d'hydrogène mesuré en sortie de réservoir est alors proportionnel à la puissance thermique injectée dans l'hydrure.

Selon l'invention, le matériau à changement de phase présente une température de fusion Tt comprise entre T1 et T2. Si on ne souhaite pas favoriser un sens de réaction par rapport à l'autre (en termes de temps de chargement ou de déchargement), T 1 devrait être le plus proche possible de (T1+ Tz)/2.

Le matériau à changement de phase utilisé est, de préférence, un alliage métallique pris parmi les alliages à base de magnésium, de zinc, d'étain, d'indium, de plomb, de strontium, de bismuth, d'antimoine, d'aluminium, de silicium, ou de calcium.

Préférentiellement l'alliage à base de magnésium est pris parmi les eutectiques du système Mg-Zn pour leur chaleur latente de fusion élevée et leur température de fusion comprise entre les températures T1 et T2 10 précédentes.

Le matériau à changement de phase peut également comprendre des éléments comme Sn, Si, Pb, Bi, Sb, Al, Ca.... qui peuvent être utilisés comme éléments minoritaires d'addition pour moduler les températures de changement de phase. Les alliages Mg-Sn et Mg-Bi sont également utilisables.

La présence d'un matériau à changement de phase à conductivité thermique élevée (supérieure ou égale à 5 W/m.K, avantageusement supérieure ou égale à 10 W/m.K, typiquement égale à environ 100 W/m.K) améliore la vitesse d'absorption de l'hydrogène par le matériau compact MgH2/matrice thermiquement conductrice.

Pour le stockage de l'hydrogène, on apporte au corps solide selon l'invention, de l'hydrogène sous forme gazeuse à une pression de stockage Pz, par exemple 15 bar.

Conformément à la courbe de la figure 5, et compte-tenu de la réaction fortement exothermique de l'hydruration de Mg/GNE (X%) en MgH2/GNE (X%), la température du matériau augmente brutalement jusqu'à T2. De la chaleur est transmise au matériau à changement de phase.

La relation de transfert de chaleur est obtenue, de préférence, en disposant, entre le matériau de stockage de l'hydrogène et de matériau de stockage de la chaleur, une paroi étanche thermiquement bonne conductrice.

La température de l'hydrure dépassant la température Tt, le matériau à changement de phase commence à fondre. Un front de fusion se propage alors à partir de la paroi séparant l'hydrure du matériau à changement de phase. Le front de fusion se propage rapidement dans le matériau à changement de phase. Ce matériau étant choisi pour avoir une conductivité thermique élevée, le gradient de température dans le matériau à changement de phase est faible, permettant à la température Ti de la paroi d'interface, de rester proche de Tf, et donc de conserver une force motrice de réaction importante.

La chaleur de réaction étant évacuée rapidement, le corps solide se charge très rapidement. La quantité de matériau à changement de phase doit être suffisante pour que la chaleur latente correspondante permettre d'emmagasiner la totalité de la chaleur dégagée par la réaction d'absorption de l'hydrogène.

Pour utiliser de l'hydrogène, on abaisse la pression d'hydrogène jusqu'à la pression d'utilisation P1.

Dès que la pression diminue, la température au sein du MgHiGNE (X%) diminue jusqu'à la température T1. Sans apport d'énergie, la réaction s'arrêterait car la désorption est endothermique.

Cependant, le matériau à changement de phase étant choisi pour avoir une forte conductivité thermique, il transmet rapidement de la chaleur au MgH2/GNE (X%).

Le matériau à changement de phase commence à se solidifier et la réaction de désorption continue.

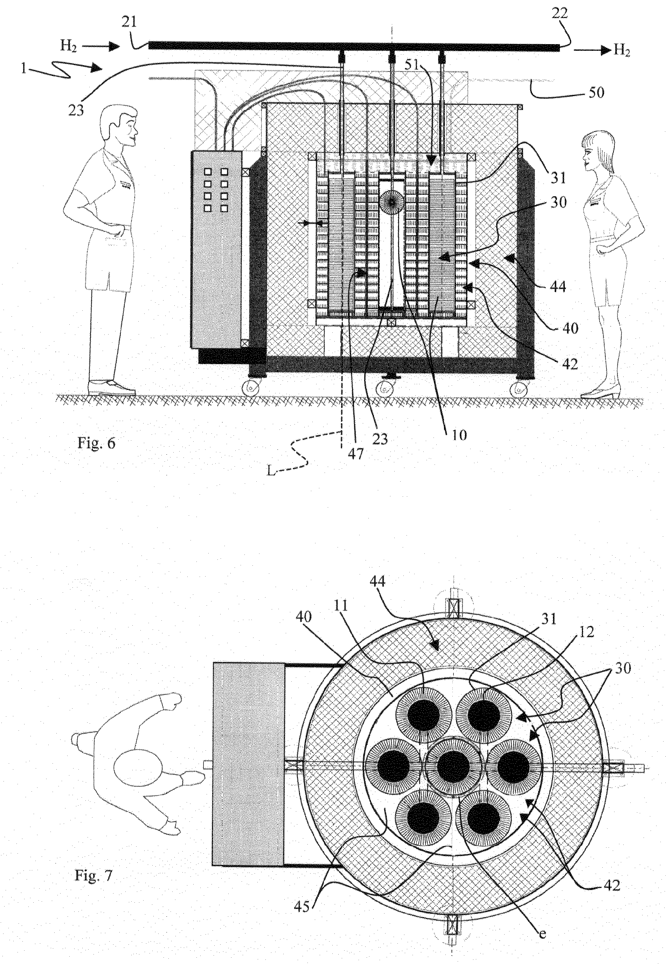

Un premier mode de réalisation d'un réservoir de stockage d'hydrogène selon l'invention est illustré en figures 6 et 7.

Le réservoir 1 comprend une pluralité de corps solides 10 selon l'invention, en communication fluidique avec une entrée 21 et une sortie d'hydrogène 22. Les corps solides sont empilés à l'intérieur de conteneurs tubulaires 30, suivant une direction d'empilement L.

Les conteneurs sont agencés dans une cuve 40 comprenant du matériau à changement de phase

Dans les modes de réalisation des figures 6 à 8, chaque corps solide 10 présente une forme de pastille 11 comprenant un trou central 12 (voir figures 2, 6 et 7).

Chaque corps solide est en communication fluidique avec l'entrée 21 et la sortie 22 d'hydrogène au moyen d'au moins un tube 23 poreux à l'hydrogène agencé dans le trou central. Le tube peut être poreux par la présence de trous dans sa paroi, ou par le matériau choisi pour fabriquer le tube.

Les corps solides 10 sont en relation de transfert de chaleur avec le matériau à changement de phase 42.

La relation de transfert de chaleur est obtenue, de préférence, par l'intermédiaire de la paroi 31 de chaque conteneur 30. On utilisera, pour la fabrication des conteneurs 30, un matériau bon conducteur de chaleur, résistant à l'hydrogène et ayant une température de fusion supérieure à la température maximale d'utilisation du matériau à changement de phase. De préférence, on utilisera un acier de type acier inoxydable.

Chaque conteneur 30 présente un coefficient de dilatation différent de celui des corps solides. Ainsi, lorsque les corps solides sont sous forme de pastille, et en une seule partie, il peut arriver que le conteneur 30 qui les contient se dilate plus que les pastilles. Dans ce cas, la relation de transfert de chaleur est altérée puisque les pastilles ne sont plus en contact avec la paroi 31 du conteneur 30.

Pour assurer la continuité du transfert de chaleur entre les corps solides 10 et le matériau de stockage de la chaleur, l'invention prévoit que chaque corps solide est constitué d'au moins deux parties, de préférence de deux demi-corps.

Si chaque corps solide est choisi pour avoir une forme globale de pastille, le corps solide comprend, de préférence, deux demi-pastilles munies chacune d'une échancrure telle que, en associant deux demi-pastilles dans un même plan, un trou central 12 soit ménagé. Si chaque corps solide comprend plus de deux parties, l'échancrure est telle que, en associant chaque partie dans un même plan, un trou central 12 soit ménagé.

En outre, l'invention prévoit un moyen de poussée de chaque partie du corps solide contre la paroi 31 du conteneur 30 qui les contient. De préférence le moyen de poussée est un moyen de ressort en compression disposé entre chaque partie du corps solide. Par exemple, le moyen de poussée est une cordelette de graphite ou une plaquette ressort qui comprime chaque partie contre la paroi 31.

Le matériau compacté MgH2/GNE (X%) peut ne pas être sous la forme de pastille. Le ou chaque conteneur peut comprendre un corps solide présentant une forme globale de tube muni d'une lumière centrale. Le ou chaque corps solide est alors en communication fluidique avec une entrée et une sortie d'hydrogène, éventuellement au moyen d'au moins un tube poreux à l'hydrogène agencé dans la lumière centrale. Chaque tube peut également comprendre plusieurs parties associées à des moyens de poussée de chaque partie de tube contre ra parol31 du conteneur 30 qui les contient.

Il est également possible de munir le réservoir d'un échangeur de chaleur agencé pour transférer la chaleur depuis ce matériau compacté MgH2/GNE (X%) vers le matériau à changement de phase.

Selon un premier mode de réalisation illustré en figures 6 et 7, les conteneurs tubulaires 30 sont disposés en un fuseau. Autour et entre les conteneurs 30 est agencé le matériau à changement de phase 42.

Afin d'améliorer les transferts thermiques, le réservoir peut comprendre, en outre, des plaques conductrices de chaleur 45 agencées entres les conteneurs et s'étendant en contact thermique avec le matériau à changement de phase.

Cette configuration illustrée en figure 7 permet, d'une part, de conduire la chaleur entre deux conteneurs 30 et, d'autre part, engendre un espace annulaire e entre le conteneur central et les autres conteneurs. Cet espace e est alors rempli de matériau à changement de phase 42 et permet un transfert de chaleur efficace entre le conteneur central et l'ensemble du matériau à changement de phase 42 de la cuve 40.

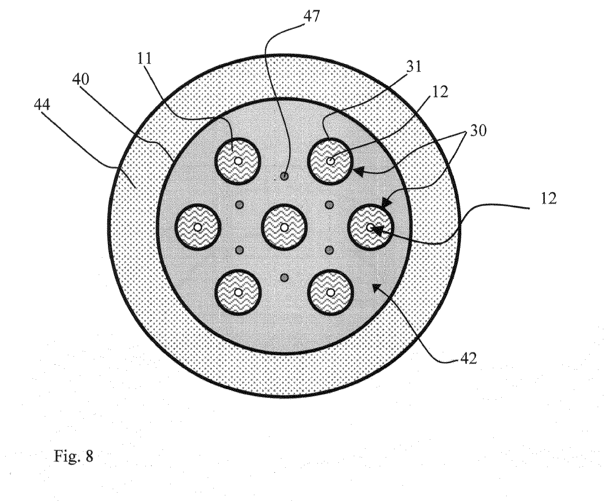

Un autre mode de réalisation est illustré en figure 8, dans lequel les conteneurs sont agencés en fuseau lâche. Ainsi, les conteurs ne sont pas en contact ou sensiblement en contact les uns avec les autres. Leur écartement respectif est suffisant pour qu'une quantité déterminée de matériau à changement de phase 42 se trouve autour de chaque conteneur 31.

Lorsque le matériau compacté comprend 90 à 95 % en poids d'hydrure de magnésium et 10 à 5% en poids de graphite naturel expansé, le réservoir est muni, de préférence, d'un échangeur de chaleur supplémentaire agencé de manière à transférer la chaleur des pastilles au matériau à changement de phase et inversement.

Cet échangeur de chaleur peut comprendre des plaques métalliques empilées en alternance avec les pastilles. Il peut comprendre également des conduites de fluide caloporteur agencées pour capter la chaleur des pastilles et la redistribuer au matériau à changement de phase.

Lorsque le matériau compacté comprend environ 80 % en poids d'hydrure de magnésium et environ 20 % en poids de graphite naturel expansé, l'échangeur de chaleur précédent est utile mais pas nécessaire.

Pour éviter des fuites thermiques vers l'extérieure du réservoir, celui-ci comprend une couche d'un matériau isolant 44 agencé pour isoler thermiquement l'ensemble.

L'isolant est choisi pour avoir une conductivité thermique inférieure ou égale à environ 0,1 W/m.K.

Pour compenser les pertes thermiques inévitables, y compris avec un isolant très performant, le réservoir selon l'invention peut comprendre un moyen de chauffage 47 du matériau à changement de phase. Ce moyen peut être, par exemple, une résistance électrique.

Cela permet de maintenir le matériau à changement de phase à une température suffisante pour conserver la chaleur qu'il a stocké lors du changement de phase.

Pour un matériau à changement de phase solide/liquide, le moyen de chauffage permet de maintenir le matériau en fusion, à l'état liquide.

Le réservoir peut également comprendre au moins un capteur de pression d'hydrogène et une soupape de sécurité s'ouvrant au-delà d'une pression définie et permettant l'évacuation de l'hydrogène vers un réservoir d'évacuation (non représenté). Ces dispositifs permettent également de s'assurer de l'alimentation correcte en hydrogène.

Bien que le matériau compacté de MgH2/GNE (X%) ne soit pas inflammable à l'air, il peut se former progressivement une oxydation de la surface du corps solide. Il est donc souhaitable que chaque conteneur soit étanche à l'air. En outre, le réservoir de stockage d'hydrogène selon l'invention peut comprendre une alimentation 50 en gaz neutre 51 agencée pour assurer la présence du gaz neutre (tel que l'argon ou l'hélium) au contact de zones du matériau de récupération de chaleur, ici le matériau à changement de phase, susceptibles d'être exposées à de l'air. Le gaz neutre est de préférence en surpression par rapport à la pression atmosphérique.

Un capteur de pression peut être prévu au sein de ce gaz neutre. De cette manière, si un ou plusieurs conteneurs 30 fuient et que de l'hydrogène s'échappe dans le matériau de stockage de la chaleur, cet hydrogène va diffuser vers la surface à travers le matériau de stockage de la chaleur sans se combiner à ce dit matériau. De ce fait, l'hydrogène va se mêler au gaz neutre et créer une surpression. Le capteur de pression va alors détecter cette surpression est stopper le fonctionnement du réservoir. Une installation de sécurité (non représentée) peut alors s'occuper d'évacuer l'hydrogène vers un réservoir d'évacuation et réalimenter le réservoir en gaz neutre.

La réalisation d'un réservoir de 250 kg d'hydrure de magnésium peut être envisagée selon le mode de réalisation illustré en figure 8.

La géométrie utilisée est une cuve cylindrique comportant sept conteneurs cylindriques identiques, disposés en un faisceau lâche.

L'hydrure de magnésium est disposé dans chaque conteneur sous forme de pastilles 11 percées en leur centre pour permettre le passage de l'hydrogène. La quantité de chaleur dégagée par la réaction dans un tel réservoir est de 555 MJ.

Le matériau à changement de phase choisi est l'alliage eutectique Mg-Zn à majorité de magnésium. La quantité d'alliage utilisée pour le stockage de la chaleur de réaction est de 2340 kg (840 litres).

Pour stocker 250 kg de MgH2 dans les sept conteneurs précédents, la hauteur d'empilement des pastilles est de l'ordre de 1,5 rn et le diamètre extérieur de la cuve devrait être de 1 m.

En disposant une couche d'isolant standard (conductivité thermique inférieure ou égale à environ 0.1W/m.K) de 20 cm d'épaisseur, les pertes par convection sur la surface externe de la cuve s'élèvent à environ 2% de l'énergie stockée sous forme d'hydrogène pendant 24 heures.

Le réservoir selon l'invention s'adresse plus particulièrement aux applications stationnaires: stockage tampon de l'électricité produite en heures creuses ou par des énergies renouvelables, stockage de très grandes quantités d'hydrogène pour usage chimique, etc.

De nombreuses variantes et alternatives peuvent être apportées sans pour cela sortir de l'invention et notamment :
- la géométrie cylindrique des conteneurs, de la cuve, et/ou de l'ensemble du réservoir permet d'optimiser les quantités de matériau
   par rapport au volume. Mais le réservoir, et en particulier la cuve et le
   ou les conteneurs peuvent avoir d'autres géométrie, telles qu'une section polygonale (carrée, rectangulaires hexagonale, des formes normalisées pour leur manutention, par exemple celles des containers destinés aux transports terrestres et maritimes (20 pieds ou 40 pieds, etc.);
- Les conteneurs peuvent être disposés aléatoirement dans la cuve ;
- Le réservoir peut comprendre un moyen auxiliaire de chauffage du ou des corps solides de stockage de l'hydrogène. Ce moyen auxiliaire permet de pallier une éventuelle insuffisance de chaleur latente, notamment lorsque le réservoir n'a pas été utilisé pendant une longue période;
- La matrice thermiquement conductrice peut être composée de céramiques non oxydes telles que TiN ou AIN ;
- L'alliage métallique du matériau à changement de phase peut être ternaire ou quaternaire ;
- le réservoir selon l'invention peut aussi utiliser l'enthalpie de chaleurs de réactions entre phases condensées, c'est à dire lors du passage d'une phase liquide à une phase gazeuse et inversement. Le changement de phase peut ainsi être l'évaporation d'une substance compatible avec l'application. La chaleur d'évaporation des composés chimiques et des éléments est très supérieure à celle de leur fusion.

Ainsi pour un métal comme le zinc le rapport entre ces chaleurs est de près de 18, il est de 16 pour Mg. Les paraffines sont envisageables mais elles nécessitent une volumétrie très supérieure à celle de l'alliage Mg-Zn et des réservoirs sous pression élevée pour une masse de produit comparable ;
- Les systèmes volatils peuvent préférablement être utilisés comme "caloporteurs » afin de délocaliser le stockage de la chaleur si nécessaire.
- les matières solides capables de sublimer peuvent également être utilisées comme matériau à changement de phase.

## Revendications

1. Réservoir de stockage d'hydrogène comprenant :
▪ une entrée (21) et une sortie (22) d'hydrogène en communication fluidique avec une pluralité de corps solides (10-11) en forme de pastilles d'un matériau compacté comprenant de l'hydrure métallique léger et une matrice thermiquement conductrice, empilés à l'intérieur d'un conteneur suivant au moins une direction d'empilement, capables d'absorption exothermique et de désorption endothermique de l'hydrogène, et en relation de transfert de chaleur avec au moins un matériau de récupération de chaleur (42), dépourvu de composé de type sels ou sels fondus, et apte à absorber la chaleur produite par l'absorption de l'hydrogène, et à restituer cette chaleur absorbée pour fournir de la chaleur pour la désorption de l'hydrogène,
▪ un échangeur de chaleur agencé de manière à transférer la chaleur des pastilles au matériau de stockage de chaleur et inversement, et comprenant des plaques métalliques empilées en alternance avec les pastilles.

2. Réservoir de stockage d'hydrogène selon la revendication 1, dans lequel ledit au moins un matériau de stockage de chaleur (42) est un matériau à changement de phase (42) tel que la chaleur produite par l'absorption d'hydrogène est emmagasinée dans le matériau à changement de phase (42) lorsque celui-ci passe d'une première à une deuxième phase, et qu'elle est restituée pour fournir de la chaleur pour la désorption de l'hydrogène lorsque le matériau à changement de phase (42) passe de Ia deuxième à la première phase.

3. Réservoir de stockage d'hydrogène selon la revendication 1 ou 2, dans lequel la matrice thermiquement conductrice est choisie dans le groupe constitué par le graphite naturel expansé, les feutres métalliques, les céramiques non oxydes et les mousses de cuivre revêtues de céramiques non oxydes.

4. Réservoir de stockage d'hydrogène selon la revendication 3, dans lequel le matériau compacté comprend 75 à 99 % en poids d'hydrure de magnésium et 25 à 1 % en poids de graphite naturel expansé.

5. Réservoir de stockage d'hydrogène selon l'une quelconque des revendications 1 à 4, dans lequel l'hydrure métallique est choisi dans le groupe constitué par de l'hydrure de magnésium et de l'hydrure d'un alliage de magnésium.

6. Réservoir de stockage d'hydrogène selon l'une quelconque des revendications 1 à 5, dans lequel le matériau à changement de phase (42) présente une température de changement de phase comprise entre une première température (T-i) d'équilibre absorption/désorption du matériau compacté à une première pression (Pi) d'utilisation comprise entre 1 et 4 bar, et une deuxième température (T₂) d'équilibre absorption/désorption du matériau compacté à une deuxième pression (P₂) d'utilisation comprise entre 10 et 20 bar.

7. Réservoir de stockage d'hydrogène selon la revendication 6, dans lequel le matériau à changement de phase (42) présente une conductivité thermique supérieure ou égale à 5 W/m.K, avantageusement supérieure ou égale à 10 W/m.K, typiquement égale à environ 100 W/m.K.

8. Réservoir de stockage d'hydrogène selon la revendication 7, dans lequel le matériau à changement de phase (42) est un alliage métallique.

9. Réservoir de stockage d'hydrogène selon la revendication 8, dans lequel l'alliage métallique est choisi dans la liste constituée par un alliage magnésium-zinc, un alliage magnésium-étain et un alliage magnésium-bismuth ;

10. Réservoir de stockage d'hydrogène selon l'une quelconque des revendications 1 à 9, dans lequel le conteneur est un conteneur tubulaire (30) délimité par une paroi (31) thermiquement conductible, et agencé dans une cuve comprenant le matériau de stockage de chaleur.

11. Réservoir de stockage d'hydrogène selon la revendication 10, comprenant une pluralité de conteneurs tubulaires disposés en fuseau dans la cuve et autour desquels est agencé le matériau stockage de chaleur.

12. Réservoir de stockage d'hydrogène selon la revendication 11, dans lequel chaque pastille présente un trou central.

13. Réservoir de stockage d'hydrogène selon l'une quelconque des revendications 11 à 12, dans lequel un corps solide comprend au moins deux parties associées à un moyen de poussée de chaque partie en contact thermique avec la paroi du conteneur.

14. Réservoir de stockage d'hydrogène selon l'une quelconque des revendications 1 à 13, comprenant une alimentation en gaz neutre agencée pour assurer la présence du gaz neutre au contact de zones du matériau de récupération de chaleur susceptibles d'être exposées à de l'air.

15. Réservoir de stockage d'hydrogène selon la revendication 1, dans lequel ledit au moins un matériau de stockage de chaleur (42) comprend au moins deux réactifs aptes à réagir l'un avec l'autre au cours d'une réaction endothermique utilisant la chaleur de d'absorption de l'hydrogène pour générer au moins un produit de réaction, celui-ci étant apte à réagir au cours d'une réaction exothermique fournissant de la chaleur pour la désorption de l'hydrogène pour générer lesdits au moins deux réactifs.
